# EUROPEAN PATENT SPECIFICATION

(11) **EP 1 269 396 B1**
(45) Date of publication and mention of the grant of the patent: **10.12.2008**
(21) Application number: 01918048.8
(22) Date of filing: 21.03.2001
(51) Int. Cl.: G06K 1/12, G06K 19/06, G06F 3/03

(54) **APPARATUS AND METHODS RELATING TO IMAGES**
VORRICHTUNGEN UND VERFAHREN, DIE BILDER BETREFFEN
APPAREIL ET PROCEDES POUR IMAGES

(30) Priority: 21.03.2000 SE 0000950
(43) Date of publication of application: 02.01.2003
(73) Proprietor: Anoto AB, 223 69 Lund (SE)
(72) Inventor: ERICSON, Petter, S-211 49 Malmö (SE)
(86) International application number: PCT/SE2001/000609
(87) International publication number: WO 2001/071644

(56) References cited:
- EP-A2- 0 171 284
- WO-A-01/01670
- WO-A1-92/17859
- US-A- 4 389 712
- US-A- 5 315 098
- US-A- 5 416 312
- US-A- 5 852 434

## Description

### TECHNICAL FIELD

The present invention relates to apparatus and methods relating to surfaces which are provided with images. More specifically, the invention relates to the reading of information from images.

### BACKGROUND

In many contexts, both commercial and scientific, it is of importance for it to be possible to create images on a surface, where the image contains as much information as possible. In this context, images can comprise, for example, photographically produced images of real objects and artificially generated images where the information is represented by structures of varying blackness. In addition to the information which is directly visible from the varying blackness over the image, it can be of use to add information to the image which is not directly apparent from the structures of varying blackness.

It is also of importance to be able to read and interpret this information in the images applied to the surface, by means of reading apparatus. Examples can extend from applying and reading images on paper surfaces to applying and reading information from surfaces on products such as containers etc.

In US 5,315,098 methods and means are illustrated which encode digital data in the angular orientation of circularly asymmetric halftone dot patterns that are written into the halftone cells of digital halftone images. **The claims are delimited against this document.**

A drawback of the invention presented in US 5,315,098 is that its use is restricted to applications where the halftone cells are of constant spatial extension across an image. Another restriction is that the halftone information in the cells is restricted in spatial extent in that it must have an elongated shape. This means that each halftone cell must contain an empty area thus reducing the overall dynamic range of the image.The prior art also comprises US 5852434, EP 0171284, WO 92/17859 and US 5416312, which disclose different types of coding patterns that may be provided on a surface to encode positions or other types of data.

US 4389712 discloses an optical memory for storing human readable pictorial information and machine readable digital information in the same format. The information is formatted as human readable imagery with the machine readable digital data being stored as picture elements of the image.

WO 01/01670, constituting prior art under Art. 54(3) EPC, discloses a coding pattern which comprises a virtual raster and a plurality of symbols. Each symbol comprises a virtual raster point, which is represented by the intersection between raster lines, and a marking which has the form of a dot. The value of the symbol is given by a displacement of the dot.

One problem is thus to provide an improved solution for storing additional information in and reading additional information from images.

### SUMMARY OF THE INVENTION

The object of the present invention is to solve problems related to the prior art. From a first aspect, this object is achieved by means of a product according to claim 1, from a second aspect it is achieved by means of a method and a computer program according to claims 21 and 23, respectively. The invention further involves a system for handling digitized information according to claim 18.

In general, the invention points to aspects related to coding patterns which are applied to a product, where the coding pattern is in a form of an image produced with the aid of a so-called screen-printing technique.

Screen-printed images are made up of a large number of picture elements in the form of points, so-called raster points. An image is characterized by spatially varying density where the variations in density are represented by varying extents of the raster points. Depending on the equipment used for generating the images with the aid of this technique, a widely varying quality in terms of spatial resolution and in terms of number of levels of density can be produced. A determining factor is the capacity of the equipment with respect to the size of the raster points and the nature of the surface on which the image is to be printed.

A product according to the invention thus has, according to the first aspect, a surface which is provided with an image in the form of a coding pattern. The coding pattern comprises symbols which represent at least two different values, where each symbol comprises one raster point and at least one marking. The raster point is part of a raster which extends over the surface and the value of each symbol is indicated by the displacement of the center point of the said marking with respect to a raster point. The markings each have a spatial extent which, in combination, at least partially forms the image.

The effect which is achieved according to the first aspect of the invention is thus that the possibility is obtained of reading additional information from an image which is printed on a product with the aid of a screen-printing technique. One advantage with respect to the prior art is certainly that the amount of information which can be read from the image is larger. Images printed according to the prior art without an information-carrying coding pattern thus lack the additional "layer" of information which is contained in the coding pattern.

According to the second aspect of the present invention, an image in the form of a coding pattern can be produced by a method. The coding pattern comprises symbols which represent at least two different values and each symbol comprises a raster point and at least one marking. The raster point is included in a raster which extends over the surface and the value of each symbol is indicated by the displacement of the center point of said marking in relation to a raster point. For each one of the markings, the spatial extents of the markings, which, in combination, at least partially form the image, are determined on the basis of information in the image.

The effect which is achieved according to the second aspect of the invention is thus that the possibility is obtained of providing an image, which is printed on a product with the aid of screen-printing technique, with additional information beyond the information which is inherent in the image. An advantage with respect to the prior art is of course that the amount of information which can be stored in the image is larger. Images printed according to the prior art, without an information-carrying coding pattern, thus lack the additional "layer" of information which is contained in the coding pattern.

In slightly more specific terms, these two aspects of the invention can be described by an original image which is to be printed, for example, in a newspaper, normally being printed according to a screen-printing technique which consists of the image being printed as a plurality of small points which are regularly arranged in a raster (i.e. a grid network with one point at each crossing between two lines). Different degrees of density, i.e. graytones, are produced in the image by the points being made to be of different size. In an area which is to be black, the points are made large and in an area which is to be light, the points are made small. One concept according to the invention is to code additional information, for example in the form of positions, text, numbers etc., in the image by the center of gravity of each point being displaced from its normal position in the grid network. If the point is displaced a given distance upward from the normal position in the grid network, the point codes the value 00, the same distance to the right the point codes the value 10, the same distance downward gives the value 11 and the same distance to the left gives the value 01. A set of displaced points together gives binary numbers which code information. Since the points are relatively small and the displacements are also relatively small, there appears to be no difference to the naked eye in the image, but with an apparatus according to the invention, the displacement of the points can be read and the information in the image can be decoded. As mentioned, the coded information can be, for example, positions which make it easier to scan in the image, or text, for example an explanation of the image, or copyright information.

To summarize, these two aspects of the invention illustrate how an information coding pattern may be used to create an image with which a user can interact. As will be discussed further below, the information contained in the raster of an image will be readable with the help of a reading device. An example of an application of the invention according to the above discussed aspects, is to produce, e.g., newspapers or magazines wherein images are printed with a coding pattern as discussed. A reader/user will then, depending on the information contained in the coding pattern, be able to "interact" with the images to the extent that the reading device will be able to convey the further information contained in the image.

Such an application is envisaged in a system for handling digitized information, wherein the system comprises a database of information relating to a virtual area consisting of all position coordinates that a position coding pattern described herein is capable of encoding. The virtual area is separated into regions, to each of which rules are associated, where the rules state how the system is to handle encoded information emanating from a apparatus reading the coding pattern. Regions associated with different rules may, or may not, be visible to the eye when printed on a product.

An apparatus for reading the coding pattern hence communicates with, e.g., a server in a computer network or with a more local computer, in which server or computer a matching procedure takes place between received position codes and the database. After the matching, actions are taken in accordance with the rules associated with the region matching the received position coding information. Examples of such actions include further information retrieval and presentation from computer servers, via e.g. Internet, associated with a printed image in, e.g., a magazine, catalogue or book. The further presentation of information may be of any "multi-media" character and include images, moving images and sound. Other actions which may be handled according to the rules include interaction between the reader/viewer and an actor associated with the region in question. Such interaction may be any electronic commerce interactions such as ordering products, financial services etc.

In the context of the invention, the term "image" should be given a broad interpretation, including all kinds of graphic reproductions. Apart from photographic reproduction, images in the form of traditional forms and layouts may be created, where lines and boxes are visualized by the image in the form of the coding pattern. Examples of such forms are to be found in international patent applications WO 00/73981, WO 00/73887 and WO 01/16691.

A specific advantage of the invention is that, by printing an image using a coding pattern containing further information which enables interaction, it allows for more flexibility when providing products with images. More space can be appointed to images as compared to traditional presentations where barcodes, tick-boxes etc. are used. Moreover, it is advantageous that the printing of the image and the coding pattern is performed in one and the same step.

Needless to say, a product according to the invention can be made more aestethically pleasing to view in that the image itself comprise the regions allowing the interaction.

A general advantage of pattern and pattern production according to the aspects of the invention is more or less related to the fact that this is a digital operation. The positions of the markings are entered and interpreted as binary numbers, in which case the equipment to be used can be of relatively simple nature.

A more or less problematic situation which can arise in the printing of markings, i.e. screen-printing points, with varying spatial extents is of course that the markings can overlap one another in certain areas. These areas are characterized by a relatively high density. Such overlapping make it more difficult to determine the location of single markings and thus make it more difficult to read the additional information which is coded in the markings. Certainly, the problem can be avoided by markings which can be expected to overlap being limited in their spatial extents even before the printing. However, this entails limiting the dynamic range with respect to the density variation which characterizes the image which is to be printed with the coding pattern.

Known solutions with respect to the determination of the locations of overlapping markings can be drawn from, for example, the technique of astrometrically determining positions of imaged stars which are located in dense starfields. This technique tells us that with knowledge gathered in advance about the appearance, in the form of intensity distribution within the markings, of single markings, the positions of the markings, i.e. the positions of the stars, can be determined even if a plurality of the markings overlap one another. Three-dimensional pattern recognition algorithms are applied which more or less directly give, for example, the center point of a marking which "flows together" with adjoining markings.

A disadvantage of the known astrometrical technique is that it presupposes that the three-dimensional appearance of the markings in the form of intensity distribution is known in advance in order for the pattern recognition algorithm to be able to deliver a reasonable assumption of the center point of the marking.

With an appearance, i.e. spatial extent (form) and size, determined in advance for each one of the markings which are to constitute a pattern, a pattern can thus be produced according to the invention. Markings are provided with changes determined in advance. The changes occur advantageously in the spatial configuration of the markings and can be more or less regular. The changes are to be preferably so regular that it will be possible in subsequent reading of the pattern with its markings to recognize the marking, when an identification of the change is made, without necessarily having read the marking in its complete spatial extent. Once the marking is recognized, for example, its center point can be determined.

The changed markings can imply, for example, that overlapping markings comprise at least one contrasting indicator, the spatial extent and place within the marking of which indicate the center point of the marking. Certainly, these contrasting indicators can be of more or less arbitrary configuration but it certainly suggests itself to utilize simple symbols such as points, circles or rectangles since reading and interpreting such symbols requires a limited set of image analysis operations to detect them.

An advantage of patterns and producing patterns according to the above is that a large dynamic range of density levels can be obtained whilst retaining the readability. It is thus possible to print patterns which contain large markings/raster points without, for example, losing the digitally coded position information.

According to the third aspect of the invention, a coding pattern located in the image and containing symbols is read. As according to the above aspects, the symbols represent at least two different values, each symbol comprising one raster point and at least one marking. The raster point is included in a raster which extends over the surface and the value of each symbol is indicated by the placement of said marking in relation to a raster point. The method comprises determining markings which at least partially overlap one another and reading for each one of these overlapping markings at least one contrasting indicator, the spatial extent and place within the marking of which indicate the placement of the marking.

Reading can be advantageously carried out by means of an apparatus which can be handheld and communicate wirelessly with, for example, a computer which receives both image information and information from the coding pattern which is read.

### BRIEF DESCRIPTION OF THE DRAWINGS

In the text which follows, the invention will be described in greater detail through embodiments and referring to the accompanying drawings.
Fig. 1 schematically shows an embodiment of a product according to the present invention which is provided with a position-coding pattern.
Figs 2a-2d schematically show how the symbols can be configured in an embodiment of the invention.
Fig. 3 schematically shows an example of 4x4 symbols which are used for coding a position.
Fig. 4 schematically shows an apparatus according to the present invention which can be used for reading a coding pattern.
Fig. 5a shows an image in the form of a coding pattern which comprises markings with varying sizes.
Fig. 5b shows a detail from the image in Fig. 5a.
Fig. 5c shows the image of figure 5a printed according to prior art.
Figs 6a and 6b show details from an image where overlapping markings have been provided with contrasting indicators.

### DESCRIPTION OF PREFERRED EMBODIMENTS

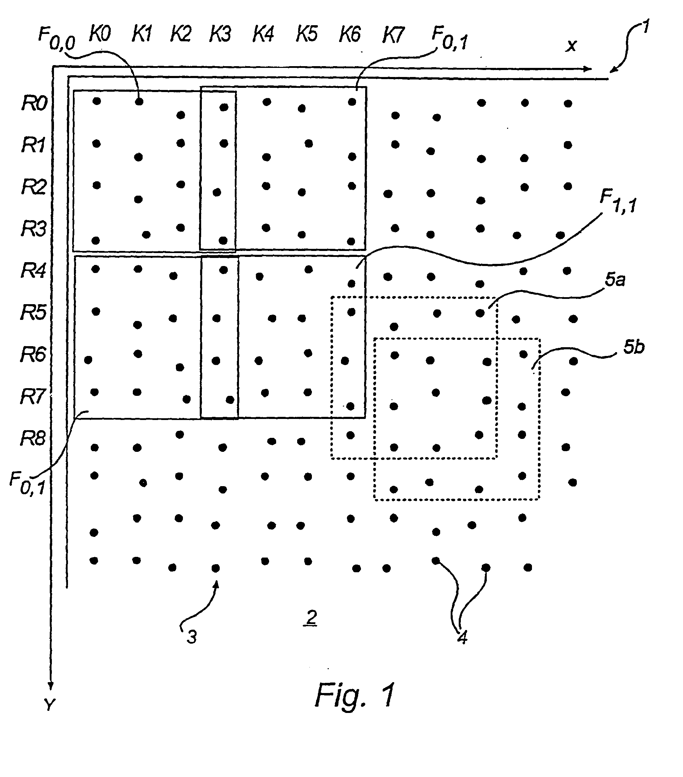

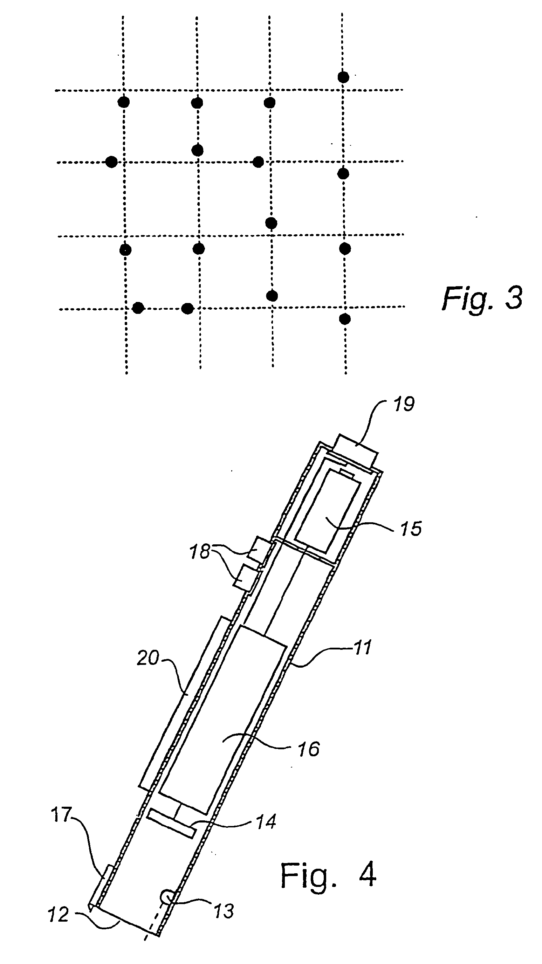

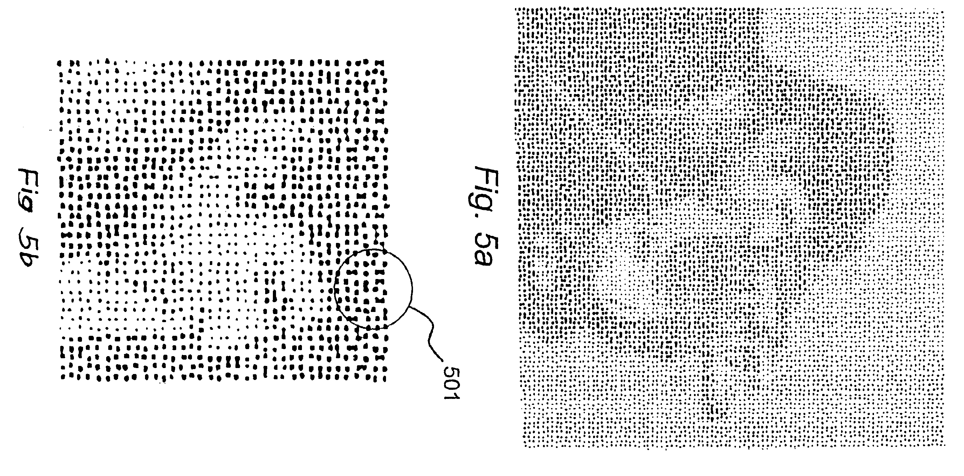

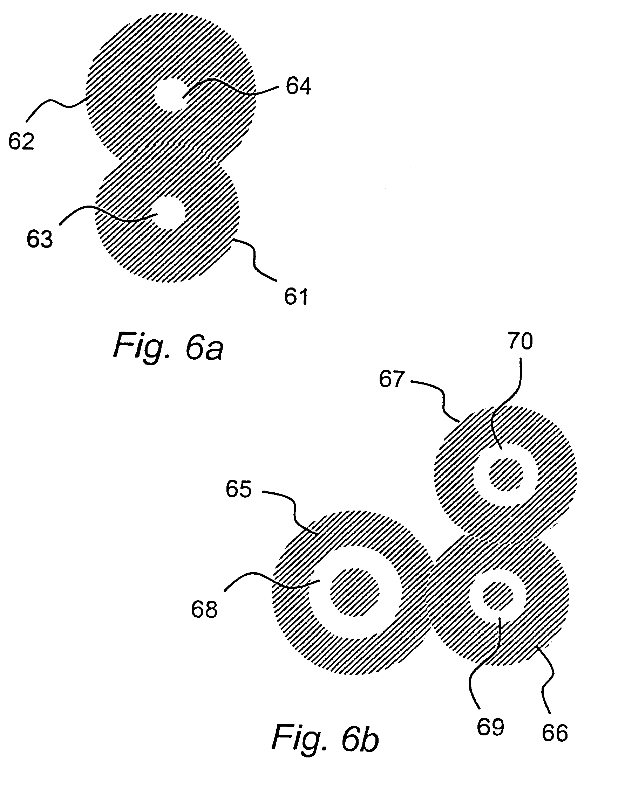

For the sake of clarity, the detailed description of the invention below is divided into a number of part-descriptions. As an introduction, a coding pattern will be presented with reference to Figs 1, 2a-d and 3. This coding pattern can be used for information storage as has been outlined above. As an example, the information stored in the pattern has been selected to be position information. After the presentation of the coding pattern, an apparatus which is intended for reading the pattern is then presented in connection with Fig. 4. After that is shown how an image can be produced by printing a screen pattern in the form of the coding pattern presented, comprising markings of varying extents, referring to Figs 5a and 5b. Finally, a method of modifying the appearance of the pattern markings which, on printing an image, overlap one another, is presented with reference to Figs 6a and 6b.

In the following discussion regarding the coding pattern a number of calculations take place. These calculations are performed in processing means, such as a processor connected to a printing device. The software which performs the calculations is written in accordance with the description to follow and it is assumed that the person skilled in the art will choose suitable tools for performing such programming. The software may be present, or stored, in any form known in the art, such as any volatile or non-volatile memory units capable of being connected to the processor and be readable by the processor, such as a diskette or a CD-ROM, as well as propagated signals such as the stream of bits that represent Internet transmission of packets or the carrier waves that are transmitted to satellites.

The coding pattern used below is described in some more detail in WO 01/26032**,** WO 01/26033 **and** WO 01/16691**.**

Fig. 1 shows a part of a product in the form of a sheet of paper 1 which is provided on its surface 2 with an optically readable position-coding pattern 3 which enables position determination to be performed. The position-coding pattern consists of symbols 4 which are systematically arranged over the surface 2 so that it has a "patterned" appearance. The symbols comprise markings which in Fig. 1 are round and of constant size for the sake of clarity.

The paper has an x coordinate axis and a y coordinate axis. In this case, the position determination can be carried out on the surface of the entire product. In other cases, the surface which allows the position determination may constitute a lesser part of the product.

The position-coding pattern comprises a virtual raster which is thus neither visible to the human eye nor can it be detected directly by an apparatus which is to determine positions on the surface, and a plurality of symbols 4 each of which can assume one of four values "1" - "4" as is described in the text which follows. In this connection it should be pointed out that the position-coding pattern in Fig. 1 is greatly enlarged for the sake of clarity. Moreover, it is shown only on part of the paper.

The position-coding pattern is arranged in such a manner that the position of a partial surface on the writing surface is coded by symbols on this partial surface. A first and a second partial surface 5a, 5b are shown with dashed lines in Fig. 1. The part of the position-coding pattern (here 4 x 4 symbols) which is located on the first partial surface 5a codes a first position and the part of the position-coding pattern which is located on the second partial surface 5b codes a second position. The position-coding pattern is thus partly common to the adjoining first and second positions. Such a position-coding pattern is designated as "floating" in this application.

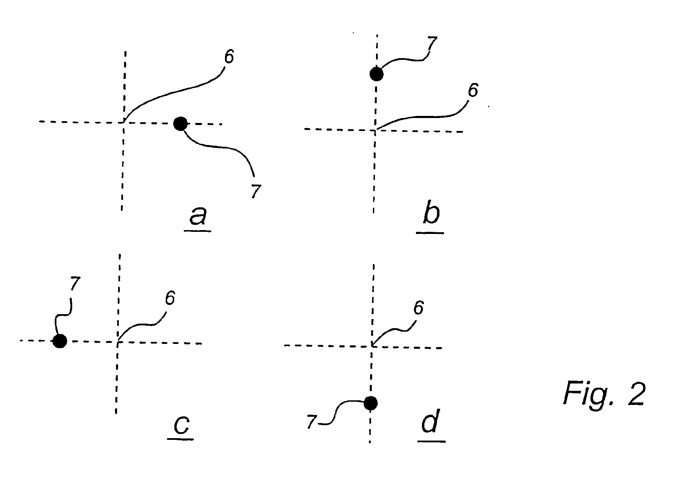

Figs 2a-d show an embodiment of a symbol which can be used in the position-coding pattern according to the invention. The symbol comprises a virtual raster point 6 which is represented by the intersection between the raster lines, and a marking 7 which has the form of a point. The value of the symbol is based on where the marking is placed. In the example in Fig. 2, four possible placements are located, one on each of the raster lines which start from the raster points. The displacement of the marking 7, or more specifically its center of gravity, from the raster point is of the same magnitude for all values. In the text which follows, the symbol has the value 1 in Fig. 2a, the value 2 in Fig. 2b, the value 3 in Fig. 2c and the value 4 in Fig. 2d. Expressed differently, there are four different types of symbols.

Each symbol can also represent four values "1-4". This entails that the position-coding pattern can be divided into a first position code for the x coordinate and a second position code for the y coordinate. The dividing is carried out according to the following:

| Symbol value | x code | y code |
|---|---|---|
| 1 | 1 | 1 |
| 2 | 0 | 1 |
| 3 | 1 | 0 |
| 4 | 0 | 0 |

The value of each symbol is thus translated into a first digit, in this case bit, for the x code and into a second digit, in this case bit, for the y code. In this way two completely independent bit patterns are obtained. The patterns can be combined into a common pattern which is graphically coded by means of a plurality of symbols according to Fig. 2.

Each position is coded by means of a plurality of symbols. In this example, 4x4 symbols are used for coding a position in two dimensions, i.e. an x coordinate and a y coordinate.

The position code is made up by means of a number series of ones and zeros which have the characteristic that no sequence of four bits occurs more than once in the series. The number series is cyclic which means that the characteristic also applies if the end of the series is coupled together with its beginning. A sequence of four bits thus always has an unambiguously determined position in the number series.

The series can be maximally 16 bits long if it has the characteristic of sequences of four bits described above. In this example, however, only a seven-bits-long series according to the following is used:
"0 0 0 1 0 1 0"

This series contains seven unique sequences of four bits which code a position in the series according to the following:

| | |
|---|---|
| Position in the series | Sequence |
| 0 | 0001 |
| 1 | 0010 |
| 2 | 0101 |
| 3 | 1010 |
| 4 | 0100 |
| 5 | 1000 |
| 6 | 0000 |

For coding the x coordinate, the number series is written sequentially in columns over the entire surface which is to be coded. The coding is based on the difference or position displacement between numbers in adjoining columns. The magnitude of the difference is determined by the position in the number series at which the column is to begin (i.e. with which sequence). More specifically, if the difference modulo seven is taken between, on the one hand, a number which is coded by a four-bit sequence in a first column and which can thus have the value (the position) 0-6, and, on the other hand, a corresponding number (i.e. the sequence of the same "height") in an adjoining column, the result will be the same independently of where along the two columns the comparison is made. Thus, it is possible to code an x coordinate which is constant for all y coordinates by means of the difference between two columns.

Since each position on the surface is coded by 4x4 symbols in this example, this provides access to three differences (with the value 0-6), according to the above for coding the x coordinate. The coding is then done in such a manner that of the three differences, one will always have the value 1 or 2 and the other two will have the value in the interval 3-6. No differences will thus be zero in the x code. In other words, the x code is constructed in such a manner that the differences will be as follows:
(3-6) (3-6) (1-2) (3-6) (3-6) (1-2) (3-6) (3-6) (1-2)...

Each x coordinate is thus coded with two numbers between 3 and 6 and a subsequent number which is 1 or 2. Subtracting 3 from the high numbers and one from the low one, a number is obtained in a mixed base which directly provides a position in the x direction from which the x coordinate can then be determined directly as is shown in the example below.

Using the principle described above, it is thus possible to code x coordinates 0, 1, 2..., by means of numbers which represent three differences. These differences are coded with a bit pattern which is based on the above number series. Finally, the bit pattern can be coded graphically by means of the symbols in Fig. 2.

In many cases, when inputting 4x4 symbols, one does not obtain a complete number which codes the x coordinate but parts of two numbers. Since the least significant part of the numbers is always 1 or 2, however, a complete number can be reconstructed in a simple manner.

The y coordinates are coded in accordance with the same principle which is used for the x coordinates. The cyclic number series is written repeatedly in horizontal rows over the surface which is to be position-coded. Exactly as in the case of the x coordinates, the rows are allowed to begin at different positions, i.e. with different sequences, in the number series. For the y coordinates, however, differences are not used but the coordinates are coded with numbers which are based on the starting position of the number series in each row. Having determined the x coordinate for 4x4 symbols, it is possible to determine the starting positions in the number series for the rows which are included in the y code in the 4x4 symbols. In the y code, the most significant number is determined by allowing it to be the only one which has a value in a specific interval. In this example, one row of four is allowed to begin in position 0-1 in the number series to indicate that this row relates to the least significant number in a y coordinate, and the other three begin in position 2-6. In the y direction, there is thus a number series according to the following:
(2-6) (2-6) (2-6) (0-1) (2-6) (2-6) (2-6) (0-1) (2-6) ...

Each y coordinate is thus coded with three numbers between 2 and 6 and a subsequent number between 0 and 1.

Subtracting 1 from the low number and 2 from the high ones provides in the same manner as for the x direction a position in the y direction in mixed base from which the y coordinate can be determined directly.

Using the above method, 4 x 4 x 2 = 32 positions can be coded in the x direction. Each such position corresponds to three differences which provides 3 x 32 = 96 positions. Furthermore, 5 x 5 x 5 x 2 = 250 positions can be coded in the y direction. Each such position corresponds to 4 rows which provides 4 x 250 = 1000 positions. Altogether, 96,000 positions can thus be coded. Since the x coding is based on differences, however, it is possible to select the position in which the first number series begins. Taking into consideration that the first number series can begin at seven different positions, it is possible to code 7 x 96,000 = 672,000 positions. The starting positions for the first number series in the first column can be calculated when the x coordinate has been determined. The above-mentioned seven different starting positions for the first series can code different sheets or writing surfaces on a product.

For further illustrating the invention according to this embodiment, a specific example follows here which is based on the embodiment of the position coding described.

Fig. 3 shows an example of an image with 4x4 symbols which are read by an apparatus for position determination.

These 4x4 symbols have the following value:
4 4 4 2
3 2 3 4
4 4 2 4
1 3 2 4

These values represent the following binary x and y code:

| x code: | y code: |
|---|---|
| 0 0 0 0 | 0 0 0 1 |
| 1 0 1 0 | 0 1 0 0 |
| 0 0 0 0 | 0 0 1 0 |
| 1 1 0 0 | 1 0 1 0 |

The vertical x sequences code the following positions in the number series: 2 0 4 6. The differences between the columns become -2 4 2 which modulo 7 provides: 5 4 2 which, in mixed base, codes position (5-3) x 8 + (4-3) x 2 + (2-1) = 16 + 2 + 1 = 19. Since the first coded x position is position 0, the difference which lies in the interval 1-2 and which appears in the 4x4 symbols is the twentieth such difference. Since there is also a total of three columns for each such difference and there is a start column, the vertical sequence furthest to the right in the 4x4 x code belongs to the 61st column in the x code (3 x 20 + 1 = 61) and that furthest to the left to the 58th.

The horizontal y sequences code the positions 0 4 1 3 in the number series. Since these series begin in the 58th column, the starting position of the rows is these numbers minus 57 modulo7 which provides the starting positions 6 3 0 2. Translated into digits in the mixed base, this becomes 6-2, 3-2, 0-0, 2-2 = 4 1 0 0, where the third digit is the least significant digit in the current number. The fourth digit is then the most significant digit in the next number. In this case, this must be the same as in the current number. (The exception is when the current number consists of the highest possible digits in all positions. It is then apparent that the start of the next number is one greater than the start of the current number).

The position of the four-digit number becomes 0x50 + 4x10 + 1x2 + 0x1 = 42 in the mixed base.

The third row in the y code is thus the 43rd which has starting position 0 or 1 and since there are four rows in total for each such row, the third row is number 43x4 = 172.

In this example, the position for the top left corner of the 4x4 symbol group is thus (58,170).

Since the x sequences in the 4x4 group begin in row 170, the x columns of the entire pattern begin in positions ((2 0 4 6) -169) mod 7 = 1 6 3 5 of the number series. Between the last starting position (5) and the first starting position, the numbers 0-19 are coded in the mixed base and by summing up the representations for the numbers 0-19 in the mixed base, the total difference between these columns is obtained. A primitive algorithm for doing this is to generate these twenty numbers and directly summing up their digits. The sum obtained is called s. The sheet or writing surface is then given by (5-s) modulo7.

In the above example, an embodiment has been described where each position is coded with 4x4 symbols and a number series with 7 bits is used. Naturally, this is only one example. Positions can be coded with more or fewer symbols. They do not need to be the same amount in both directions. The number series can have different lengths and does not need to be binary but can be based on another base. Different number series can be used for coding in the x direction and coding in the y direction. The symbols can have a different number of values.

Furthermore, in the above example the marking is a point. Naturally, this can have another appearance. For example, it can be in the form of a line which begins at the virtual raster point and extends from there to a certain position.

In the above example, the symbols are used within a square partial surface for coding a position. The partial surface can have a different shape, for example hexagonal. Neither do the symbols need to be arranged in rows and columns at 90° angles with respect to one another but can also be arranged in other configurations.

For the position code to be detectable, the virtual raster needs to be determined. This can be done by studying the distance between different markings. The shortest distance which is found between two markings must originate from two adjoining symbols with the value 1 and 3 so that the markings are lying on the same raster line between two raster points. Once such a pair of markings has been detected, the associated raster points can be determined with knowledge of the distance between the raster points and the displacement of the markings from the raster points. When two raster points have been localized, additional raster points can be determined by means of measured distances to other markings and with knowledge of the mutual distances between the raster points.

Fig. 4 schematically shows an embodiment of an apparatus for position determination. It comprises a casing 11 which has the approximate form of a pen. In the short end of the casing, an opening 12 is located. The short end is intended to bear against, or be held at a small distance from, the surface to which an image is applied and the position determination or more general information gathering is to take place.

The casing contains mainly an optics part, an electronic circuitry part and a power supply.

The optics part comprises at least one light-emitting diode 13 for illuminating the surface which is to be imaged and a light-sensitive area sensor 14, for example a CCD or CMOS sensor, for registering a two-dimensional image. The apparatus may also contain a lens system.

The power supply for the apparatus is obtained from a battery 15 which is mounted in a separate compartment in the casing.

The electronic circuitry part contains an image-processing means 16 for determining a position on the basis of the image recorded by the sensor 14 and, more specifically, a processor unit with a processor which is programmed for reading images from the sensor and carrying out the position determination on the basis of these images.

Thus, the apparatus in this embodiment can also comprise a pen point 17 with the aid of which one can write normal pigment-based writing on the surface on which the position determination is to take place. The pen point 17 can be retracted and extended so that the user can control if it is to be used or not. In certain applications, the apparatus does not need to have any pen point at all or comprise a fixed, non-retractable, pen point. Moreover, the device may comprise a plurality of retractable pen points, each having, e.g., a different color.

The apparatus also comprises buttons 18 with the aid of which the apparatus is activated and controlled. It also has a transceiver 19 for wireless transmission, e.g. by IR light or radio waves, of information to and from the apparatus. The apparatus can also comprise a display 20 for showing positions or recorded information.

In the international patent application WO 98/20446, an apparatus for recording text is described. This apparatus can be used for position determination if it is programmed in a suitable manner. If it is to be used for pigment-based writing, it must also be provided with a pen point.

The apparatus can be divided into different physical casings, a first casing containing components which are necessary for capturing images of the position-coding pattern and for transferring these to components which are located in a second casing and which carry out the position determination on the basis of a recorded image or images.

As mentioned, the position determination is done by a processor which thus must have software for locating and decoding the symbols in an image and for determining positions from the codes thus obtained. From the above example, a person skilled in the art can design software which carries out position determination on the basis of an image of a part of a position-coding pattern.

Furthermore, a person skilled in the art can design software for printing the position-coding pattern on the basis of the above description.

In the embodiment above, the pattern can be read optically and the sensor is thus optical. As mentioned, the pattern can be based on another parameter than an optical parameter. In this case, the sensor must naturally must be of a type which can read the current parameter. Examples of such parameters are of chemical, acoustical or electromagnetic character, e.g. resistance, capacitance and inductance.

In the embodiment above, the raster is a rectangular grid. It can also have other forms, i.e. non-rectangular.

In the embodiment above, it is not the longest possible cyclic number series which is used. This results in a certain redundancy which can be used, for example, for checking the turning of the read group of symbols.

The actual calculations relating to the reading of the coding pattern are performed in processing means, such as those discussed above in connections with figure 4, that is a processor within the device itself. It is also feasible to perform the calculations in an external processor connected to the reading device. The software which performs the calculations is written in accordance with the present disclosure to follow and it is assumed that the person skilled in the art will choose suitable tools for performing such programming. The software may be present, or stored, in any form known in the art, such as any volatile or non-volatile memory units capable of being connected to the processor, such as a diskette or a CD-ROM, as well as propagated signals such as the stream of bits that represent Internet transmission of packets or the carrier waves that are transmitted to satellites.

Fig. 5a shows an image which is produced of a coding pattern, the symbols of which comprise markings of varying sizes. The symbols are part of a coding pattern according to the description above in connection with Figs 1-3. The aim of Fig. 5a is to illustrate that varying density can be produced with the aid of symbol markings according to the invention. For the sake of clarity, however, the image is shown at a very coarse scale. Certainly, the sizes of the markings and thus the detail resolution depend on the capacity of the printing device which generates the image printout as can be easily understood by a person skilled in the art.

Fig. 5b shows a detail from the image in Fig. 5a and shows more clearly than in Fig. 5a how the markings can vary in spatial extents. A large number of markings have such positions, determined by the coding, and extents so that they overlap adjacent markings. An example of an area 501 which contains such overlappings is pointed out in Fig. 5b. It should be noted that the markings as shown in Figs 5a and 5b do not have the same general appearance as the markings shown in Figs 1-3 which are more or less circular. This illustrates the fact that, within the scope of this invention, the appearance of the markings is not limited to some specific shape but can advantageously depend on the capacity of the printing device at least to a certain degree. The examples in Figs 5a and 5b originate from a conventional laser printer with limited detail resolution which is why the shapes of the markings vary.

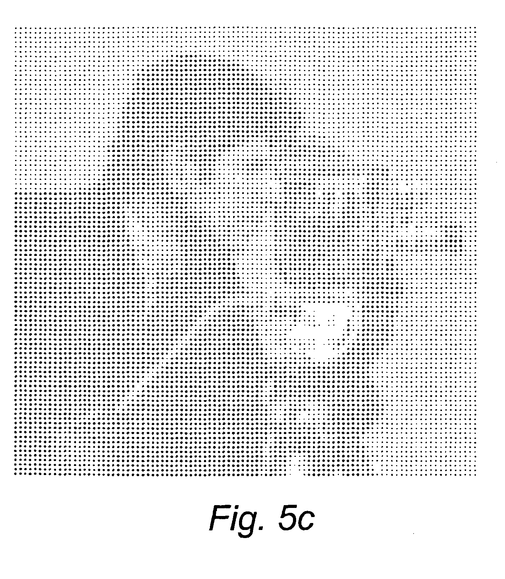

In figure 5c, the image of figure 5a is printed according to conventional technique, with no coding pattern involved. As can be seen, by comparing with the image of figure 5a, introduction of the coding pattern leads to merely a slight degradation of the quality of the image itself.

Figs 6a and 6b show schematic illustrations of markings 61, 62, 65, 66, 67 which overlap one another. The markings are presented in the form of filled-in circles. For the sake of clarity, the fillings have been carried out by means of shading in contrast to the solidly filled-in markings which were illustrated earlier in Figs 1-3 and 5. The markings in Figs 6a and 6b have also been provided with contrasting indicators 63, 64, 68, 69, 70.

The overlapping markings 61, 62 in Fig. 6a are provided with respective circular contrasting indicators 63, 64 which are placed in the center of the respective marking. The overlapping markings 65, 66, 67 in Fig. 6b are provided with respective contrasting indicators 68, 69, 70 in the form of circles which are concentric with the respective marking and centered with respect to the center of the respective marking.

On generating an image which comprises picture elements which have such density that one or more markings which are to represent the density are allocated such a spatial extent that they overlap one another according to Figs 6a or 6b, the markings are provided with a contrasting indicator. The generation of markings is preferably done by means of software in a suitably programmed computer. The generating process comprises determining, with knowledge of the density of each picture element, the extents of the markings and deciding if adjacent markings are to overlap one another on printing or printout. If such overlappings are found, these markings are provided with a contrasting indicator according to, for example, one of the illustrations in Figs 6a or 6b. However, it should be pointed out once again that the markings and the contrasting indicators can be of more or less arbitrary form.

Inputting of symbols which comprise markings with contrasting indicators is preferably done by means of a computer provided with suitably designed software. An inputting process comprises detecting two or more overlapping markings. The detection can comprise, for example, inputting of a spot of undetermined spatial configuration, the appearance of which, for example, can be one of the illustrations in Figs 6a or 6b. On such a finding, the software executes an analysis of the appearance of the spot according to known image-analysis technique, in which contrasting indicators are identified. These contrasting indicators, for example those which are illustrated in Figs 6a or 6b, are then analyzed in terms of position and extent, a center point of the respective indicators being found and interpreted as a center point of a respective marking.

Although the storage of position information in a coding pattern, and reading of position information from a coding pattern, is shown in the above example, other information can also be relevant, for example text in the form of, for example, an explanation of the image or copyright information.

## Claims

1. A product which has a surface (2) which is provided with an image in the form of a coding pattern (3) which comprises symbols (4) which represent at least two different values, each symbol comprising a raster point (6) and at least one marking (7); the raster point (6) being included in a raster which extends over the surface (2) and includes a plurality of regularly arranged raster points (6); the markings (7) having varying spatial extents which, in combination, at least partially form the image, **characterized in that** the value of each symbol (4) is being indicated by a displacement of the center point of the marking (7) in relation to its raster point (6), wherein the center point of said at least one marking (7) is placed in any of four predetermined positions on raster lines of the raster.

2. A product according to claim 1, wherein the spatial extents of the markings (7) vary insofar as the markings (7) have essentially identical form and varying size.

3. A product according to any one of claims 1-2, wherein the spatial extents of the markings (7) vary inasmuch as the markings which at least partially overlap one another comprise at least one contrasting indicator (63, 64, 68, 69, 70), the spatial extent and place within the marking (7) of which indicate the center point of the marking (7).

4. A product according to claim 3, wherein the contrasting indicator is in the form of at least one circle.

5. A product according to claim 3, wherein the contrasting indicator is in the form of at least one point.

6. A product according to claim 3, wherein the contrasting indicator is in the form of at least one rectangle.

7. A product according to any one of the preceding claims, wherein the coding pattern is a position-coding pattern (3) which codes a plurality of positions on the surface (2), each position being coded by a plurality of said symbols (4).

8. A product according to claim 7, wherein each symbol (4) contributes to the coding of more than one of said plurality of positions.

9. A product according to claim 7 or 8, wherein each symbol (4) contributes to the coding of both a first and a second position coordinate.

10. A product according to claim 9, wherein the value of each symbol (4) can be translated to at least one first number which is used for coding the first position coordinate and at least one second number which is used for coding the second position coordinate, the symbols (4) in the position-coding pattern (3) together representing a first position code for the first position coordinate and a second position code for the second position coordinate.

11. A product according to any one of claims 7-10, wherein the position-coding pattern (3) is based on a first cyclic number series which has the characteristic that no sequence with a first predetermined number of figures occurs more than once in the number series.

12. A product according to claim 8, wherein the first coordinate is coded in that a first cyclic number series, which has the characteristic that no sequence with a first predetermined number of figures occurs more than once in the number series, is repeated in columns over the surface, the columns beginning at different places in the number series.

13. A product according to claim 12, wherein the second coordinate is coded in that a second cyclic number series, which has the characteristic that no sequence with a second predetermined number of figures occurs more than once in the number series, is repeated in rows over the surface, the rows beginning at different places in the number series.

14. A product according to any one of the preceding claims, in which the said raster and said raster point (6) are virtual.

15. A product according to any one of the preceding claims, wherein each symbol (4) has precisely one marking (7) so that the symbol (4) has precisely four values.

16. A product according to any one of the preceding claims, wherein the position-coding pattern (3) on the surface (2) comprises a plurality of partial surfaces (5a, 5b), each containing the same number of symbols (4), and wherein the position-coding pattern (3) is arranged in such a manner that the position of each partial surface (5a, 5b) on the surface (2) is coded by the symbols (4) on the partial surface (5a, 5b).

17. A product according to claim 16, wherein adjoining positions are encoded by adjoining partial surfaces (5a, 5b) that partially overlap each other.

18. A system for handling digitized information, comprising:
a product according to any one of claims 1-17, wherein the coding pattern codes a plurality of positions, each position being coded by a plurality of said symbols;
a database of information relating to a virtual area consisting of all the positions that the coding pattern is capable of encoding, wherein the virtual area is separated into regions, each being associated with rules stating how positions from the coding pattern are to be handled;
an apparatus for reading positions from the coding pattern and communicating the positions; and
a computer device adapted to receive the positions from the apparatus, identify one of said regions by matching the positions against the database, and take an action in accordance with the rules associated with the thus-identified region.

19. A system according to claim 18, wherein said action comprises retrieving and presenting further information.

20. A system according to claim 19, wherein said further information comprises any of an image, moving images and sound.

21. A method for generating an image in the form of a coding pattern (3) printed on a surface (2), said coding pattern containing symbols (4), wherein the symbols represent at least two different values, each symbol comprising a raster point (6) and at least one marking (7); the raster point (6) being included in a raster which extends over the surface (2) and includes a plurality of regularly arranged raster points (6); said method comprising the step of determining for each of the markings (7), on the basis of information in the image, a spatial extent, such that the markings (7) have varying spatial extents which, in combination, at least partially form the image, **characterized by** the further step of displacing the center point of each marking (7) in relation its raster point (6) to indicate the value of each symbol (4), wherein the center point of each marking (7) is placed in any of four predetermined positions on raster lines of the raster.

22. A method according to claim 21, wherein the determining of the spatial extents of the markings (7) comprises determining markings (7) which at least partially overlap one another and determining for the overlapping markings (7) at least one contrasting indicator (63, 64, 68, 69, 70), the spatial extent and place within the marking (7) of which indicate the center point of the marking (7).

23. A computer readable medium having embodied thereon a computer program which can be read by a computer and which comprises instructions for causing a computer to execute the method according to any one of claims 21-22.

## Patentansprüche

1. Produkt, das eine Oberfläche (2) aufweist, die mit einem Bild in Form eines Codierungsmusters (3) versehen ist, das Symbole (4) umfaßt, die mindestens zwei verschiedene Werte repräsentieren, wobei jedes Symbol einen Rasterpunkt (6) und mindestens eine Markierung (7) umfaßt; wobei der Rasterpunkt (6) in einem Raster enthalten ist, das sich über die Oberfläche (2) erstreckt und eine Vielzahl von regelmäßig angeordneten Rasterpunkten (6) enthält; wobei die Markierungen (7) variierende räumliche Ausmaße aufweisen, die in Kombination mindestens teilweise das Bild bilden, **dadurch gekennzeichnet, daß** der Wert jedes Symbols (4) durch eine Versetzung des Mittelpunkts der Markierung (7) in bezug auf seinen Rasterpunkt (6) angegeben wird, wobei der Mittelpunkt der mindestens einen Markierung (7) an einer beliebigen von vier vorbestimmten Positionen auf Rasterlinien des Rasters plaziert wird.

2. Produkt nach Anspruch 1, wobei die räumlichen Ausmaße der Markierungen (7) insofern variieren, als die Markierungen (7) im wesentlichen identische Form und variierende Große aufweisen.

3. Produkt nach einem der Ansprüche 1-2, wobei die räumlichen Ausmaße der Markierungen (7) insofern variieren, als die Markierungen, die sich mindestens teilweise überlappen, mindestens einen kontrastierenden Indikator (63, 64, 68, 69, 70) umfassen, dessen räumliches Ausmaß und Stelle in der Markierung (7) den Mittelpunkt der Markierung (7) angeben.

4. Produkt nach Anspruch 3, wobei der kontrastierende Indikator in Form mindestens eines Kreises vorliegt.

5. Produkt nach Anspruch 3, wobei der kontrastierende Indikator in Form mindestens eines Punkts vorliegt.

6. Produkt nach Anspruch 3, wobei der kontrastierende Indikator in Form mindestens eines Rechtecks vorliegt.

7. Produkt nach einem der vorhergehenden Ansprüche, wobei das Codierungsmuster ein Positionscodierungsmuster (3) ist, das eine Vielzahl von Positionen auf der Oberfläche (2) codiert, wobei jede Position durch eine Vielzahl der Symbole (4) codiert wird.

8. Produkt nach Anspruch 7, wobei jedes Symbol (4) zu der Codierung von mehr als einer der Vielzahl von Positionen beiträgt.

9. Produkt nach Anspruch 7 oder 8, wobei jedes Symbol (4) zu der Codierung sowohl einer ersten als auch einer zweiten Positionskoordinate beiträgt.

10. Produkt nach Anspruch 9, wobei der Wert jedes Symbols (4) in mindestens eine erste Zahl, die zum Codieren der ersten Positionskoordinate verwendet wird, und mindestens eine zweite Zahl, die zum Codieren der zweiten Positionskoordinate verwendet wird, übersetzt werden kann, wobei die Symbole (4) in dem Positionscodierungsmuster (3) zusammen einen ersten Positionscode für die erste Positionskoordinate und einen zweiten Positionscode für die zweite Positionskoordinate repräsentieren.

11. Produkt nach einem der Ansprüche 7-10, wobei das Positionscodierungsmuster (3) auf einer ersten zyklischen Zahlenreihe basiert, die die Eigenschaft aufweist, daß keine Sequenz mit einer ersten vorbestimmten Anzahl von Ziffern mehr als einmal in der Zahlenreihe auftritt.

12. Produkt nach Anspruch 8, wobei die erste Koordinate insofern codiert wird, daß eine erste zyklische Zahlenreihe, die die Eigenschaft aufweist, daß keine Sequenz mit einer ersten vorbestimmten Anzahl von Ziffern mehr als einmal in der Zahlenreihe auftritt, in Spalten über der Oberfläche wiederholt wird, wobei die Spalten an verschiedenen Stellen in der Zahlenreihe beginnen.

13. Produkt nach Anspruch 12, wobei die zweite Koordinate insofern codiert wird, daß eine zweite zyklische Zahlenreihe, die die Eigenschaft aufweist, daß keine Sequenz mit einer zweiten vorbestimmten Anzahl von Ziffern mehr als einmal in der Zahlenreihe auftritt, in Zeilen über der Oberfläche wiederholt wird, wobei die Zeilen an verschiedenen Stellen in der Zahlenreihe beginnen.

14. Produkt nach einem der vorhergehenden Ansprüche, bei dem das Raster und der Rasterpunkt (6) virtuell sind.

15. Produkt nach einem der vorhergehenden Ansprüche, wobei jedes Symbol (4) genau eine Markierung (7) aufweist, so daß das Symbol (4) genau vier Werte aufweist.

16. Produkt nach einem der vorhergehenden Ansprüche, wobei das Positionscodierungsmuster (3) auf der Oberfläche (2) eine Vielzahl von Partialoberflächen (5a, 5b) umfaßt, die jeweils dieselbe Anzahl von Symbolen (4) enthalten, und wobei das Positionscodierungsmuster (3) dergestalt angeordnet wird, daß die Position jeder Partialoberfläche (5a, 5b) auf der Oberfläche (2) durch die Symbole (4) auf der Partialoberfläche (5a, 5b) codiert wird.

17. Produkt nach Anspruch 16, wobei angrenzende Positionen durch angrenzende Partialoberflächen (5a, 5b) codiert werden, die sich teilweise überlappen.

18. System zum Umgehen mit digitalisierten Informationen, umfassend:
ein Produkt nach einem der Ansprüche 1-17, wobei das Codierungsmuster eine Vielzahl von Positionen codiert, wobei jede Position durch eine Vielzahl der Symbole codiert wird;
eine Datenbank von Informationen bezüglich eines virtuellen Bereichs, der aus allen Positionen besteht, die das Codierungsmuster zu codieren imstande ist, wobei der virtuelle Bereich in Regionen aufgetrennt wird, die jeweils mit Regeln assoziiert sind, die aussagen, wie mit Positionen aus dem Codierungsmuster umzugehen ist;
eine Vorrichtung zum Lesen von Positionen aus dem Codierungsmuster und zum Übermitteln der Positionen; und
eine Computereinrichtung, die dafür ausgelegt ist, die Positionen von der Vorrichtung zu empfangen, durch Vergleichen der Positionen mit der Datenbank eine der Regionen zu identifizieren und gemäß den mit der so identifizierten Region assoziierten Regeln eine Aktion auszuführen.

19. System nach Anspruch 18, wobei die Aktion umfaßt, weitere Informationen abzurufen und zu präsentieren.

20. System nach Anspruch 19, wobei die weiteren Informationen beliebiges von einem Bild, beweglichen Bildern und Ton umfassen.

21. Verfahren zum Erzeugen eines Bildes in Form eines auf eine Oberfläche (2) aufgedruckten Codierungsmusters (3), wobei das Codierungsmuster Symbole (4) enthält, wobei die Symbole mindestens zwei verschiedene Werte repräsentieren, wobei jedes Symbol einen Rasterpunkt (6) und mindestens eine Markierung (7) umfaßt; wobei der Rasterpunkt (6) in einem Raster enthalten ist, das sich über die Oberfläche (2) erstreckt und eine Vielzahl von regelmäßig angeordneten Rasterpunkten (6) enthält; wobei das Verfahren den Schritt des Bestimmens eines räumlichen Ausmaßes für jede der Markierungen (7) auf der Basis von Informationen in dem Bild umfaßt, dergestalt, daß die Markierungen (7) variierende räumliche Ausmaße aufweisen, die in Kombination mindestens teilweise das Bild bilden, **gekennzeichnet durch** den weiteren Schritt des Versetzens des Mittelpunkts jeder Markierung (7) in bezug auf seinen Rasterpunkt (6) zur Angabe des Werts jedes Symbols (4) , wobei der Mittelpunkt jeder Markierung (7) an einer beliebigen von vier vorbestimmten Positionen auf Rasterlinien des Rasters plaziert wird.

22. Verfahren nach Anspruch 21, wobei das Bestimmen der räumlichen Ausmaße der Markierungen (7) umfaßt, Markierungen (7) zu bestimmen, die sich mindestens teilweise überlappen, und für die sich überlappenden Markierungen (7) mindestens einen kontrastierenden Indikator (63, 64, 68, 69, 70) zu bestimmen, dessen räumliches Ausmaß und Stelle in der Markierung (7) den Mittelpunkt der Markierung (7) angeben.

23. Computerlesbares Medium, auf dem ein Computerprogramm realisiert ist, das von einem Computer gelesen werden kann und das Anweisungen umfaßt, die bewirken, daß ein Computer das Verfahren nach einem der Ansprüche 21-22 ausführt.

## Revendications

1. Produit qui a une surface (2) qui est pourvue d'une image sous la forme d'un motif de codage (3) qui comprend des symboles (4) qui représentent au moins deux valeurs différentes, chaque symbole comprenant un point de trame (6) et au moins une marque (7) ; le point de trame (6) étant compris dans une trame qui s'étend au-dessus de la surface (2) et qui comprend une pluralité de points de trame (6) disposés régulièrement ; les marques (7) ayant des étendues spatiales variables qui, combinées, forment l'image au moins partiellement, **caractérisé en ce que** la valeur de chaque symbole (4) est indiquée par un déplacement du point central de la marque (7) par rapport à son point de trame (6), dans lequel le point central de ladite au moins une marque (7) est placé dans n'importe laquelle de quatre positions prédéterminées sur les lignes de trame de la trame.

2. Produit selon la revendication 1, dans lequel les étendues spatiales des marques (7) varient dans la mesure où les marques (7) ont une forme essentiellement identique et une taille variable.

3. Produit selon l'une quelconque des revendications 1 et 2, dans lequel les étendues spatiales des marques (7) varient dans la mesure où les marques qui se chevauchent l'une l'autre au moins partiellement comprennent au moins un indicateur contrastant (63, 64, 68, 69, 70), dont l'étendue spatiale et l'emplacement à l'intérieur de la marque (7) indiquent le point central de la marque (7).

4. Produit selon la revendication 3, dans lequel l'indicateur contrastant est sous la forme d'au moins un cercle.

5. Produit selon la revendication 3, dans lequel l'indicateur contrastant est sous la forme d'au moins un point.

6. Produit selon la revendication 3, dans lequel l'indicateur contrastant est sous la forme d'au moins un rectangle.

7. Produit selon une quelconque des revendications précédentes, dans lequel le motif de codage est un motif de codage de position (3) qui code une pluralité de positions sur la surface (2), chaque position étant codée par une pluralité desdits symboles (4).

8. Produit selon la revendication 7, dans lequel chaque symbole (4) contribue au codage de plus d'une de ladite pluralité de positions.

9. Produit selon la revendication 7 ou 8, dans lequel chaque symbole (4) contribue au codage à la fois d'une première et d'une deuxième coordonnée de position.

10. Produit selon la revendication 9, dans lequel la valeur de chaque symbole (4) peut être traduite en au moins un premier nombre qui est utilisé pour coder la première coordonnée de position et au moins un deuxième nombre qui est utilisé pour coder la deuxième coordonnée de position, les symboles (4) dans le motif de codage de position (3) représentant ensemble un premier code de position pour la première coordonnée de position et un deuxième code de position pour la deuxième coordonnée de position.

11. Produit selon l'une quelconque des revendications 7 à 10, dans lequel le motif de codage de position (3) est basé sur une première série de nombres cycliques qui a la caractéristique qu'aucune séquence avec un premier nombre prédéterminé de chiffres ne se produit plus qu'une fois dans la série de nombres.

12. Produit selon la revendication 8, dans lequel la première coordonnée est codée en ce qu'une première série de nombres cycliques, qui a la caractéristique qu'aucune séquence avec un premier nombre prédéterminé de chiffres ne se produit plus qu'une fois dans la série de nombres, est répétée dans des colonnes au-dessus de la surface, ces colonnes commençant à différents endroits dans la série de nombres.

13. Produit selon la revendication 12, dans lequel la deuxième coordonnée est codée en ce qu'une deuxième série de nombres cycliques, qui a la caractéristique qu'aucune séquence avec un deuxième nombre prédéterminé de chiffres ne se produit plus qu'une fois dans la série de nombres, est répétée dans des rangées au-dessus de la surface, ces rangées commençant à différents endroits dans la série de nombres.

14. Produit selon l'une quelconque des revendications précédentes, dans lequel ladite trame et ledit point de trame (6) sont virtuels.

15. Produit selon l'une quelconque des revendications précédentes, dans lequel chaque symbole (4) a précisément une marque (7) de façon à ce que ce symbole (4) ait précisément quatre valeurs.

16. Produit selon l'une quelconque des revendications précédentes, dans lequel le motif de codage de position (3) sur la surface (2) comporte une pluralité de surfaces partielles (5a, 5b), contenant chacune le même nombre de symboles (4), et dans lequel le motif de codage de position (3) est disposé de façon à ce que la position de chaque surface partielle (5a, 5b) sur la surface (2) soit codée par les symboles (4) sur la surface partielle (5a, 5b) .

17. Produit selon la revendication 16, dans lequel des positions contiguës sont codées par des surfaces partielles contiguës (5a, 5b) qui se chevauchent l'une l'autre partiellement.

18. Système pour traiter des informations numérisées, comprenant :
un produit selon l'une quelconque des revendications 1 à 17 ;
dans lequel le motif de codage code une pluralité de positions, chaque position étant codée par une pluralité desdits symboles ;
une base de données d'informations relatives à une zone virtuelle consistant en toutes les positions que le motif de codage est capable de coder, dans laquelle la zone virtuelle est séparée en régions, chacune étant associée à des règles stipulant comment les positions provenant du motif de codage doivent être traitées ;
un appareil pour lire les positions provenant du motif de codage et pour communiquer ces positions ; et
un dispositif ordinateur adapté de façon à recevoir les positions provenant de l'appareil, à identifier une desdites régions en faisant correspondre les positions avec la base de données, et à exécuter une action conformément aux règles associées à la région ainsi identifiée.

19. Système selon la revendication 18, dans lequel ladite action comprend la récupération et la présentation d'autres informations.

20. Système selon la revendication 19, dans lequel lesdites autres informations comprennent une image, des images mobiles et des sons.

21. Procédé pour produire une image sous la forme d'un motif de codage (3) imprimé sur une surface (2), ledit motif de codage contenant des symboles (4), dans lequel ces symboles représentent au moins deux valeurs différentes, chaque symbole comprenant un point de trame (6) et au moins une marque (7) ; le point de trame (6) étant compris dans une trame qui s'étend au-dessus de la surface (2) et qui comprend une pluralité de points de trame (6) disposés régulièrement ; ledit procédé comprenant l'étape consistant à déterminer pour chacune des marques (7), en se basant sur les informations dans l'image, une étendue spatiale, telle que les marques (7) ont des étendues spatiales variables qui, combinées, forment au moins partiellement l'image, **caractérisé par** l'autre étape consistant à déplacer le point central de chaque marque (7) par rapport à son point de trame (6) pour indiquer la valeur de chaque symbole (4), dans lequel de point central de chaque marque (7) est placé dans n'importe laquelle de quatre positions prédéterminées sur les lignes de trame de la trame.

22. Procédé selon la revendication 21, dans lequel la détermination des étendues spatiales des marques (7) comprend la détermination des marques (7) qui se chevauchent l'une l'autre au moins partiellement et la détermination pour les marques se chevauchant (7) d'au moins un indicateur contrastant (63, 64, 68, 69, 70), dont l'étendue spatiale et l'emplacement à l'intérieur de la marque (7) indiquent le point central de la marque (7).

23. Support lisible par ordinateur ayant un programme informatique incorporé sur lui qui peut être lu par un ordinateur et qui comprend des instructions pour faire exécuter à un ordinateur le procédé selon l'une quelconque des revendications 21 à 22.
